# EUROPEAN PATENT APPLICATION

(11) **EP 4 827 111 A1**
(43) Date of publication of application: **21.10.2026**
(21) Application number: 24902363.1
(22) Date of filing: 23.10.2024
(51) Int. Cl.: H04R 1/08

(54) **SOUND AREA CONFIGURATION METHOD FOR VISUAL CEILING MICROPHONE, ELECTRONIC DEVICE, AND STORAGE MEDIUM**

(30) Priority: 11.12.2023 CN 202311696400; 12.06.2024 CN 202410752667
(71) Applicant: Ai Speech Co., Ltd., Suzhou, Jiangsu 215123 (CN)
(72) Inventor: CHEN, Yongbo, Suzhou, Jiangsu 215123 (CN); ZHANG, Huabing, Suzhou, Jiangsu 215123 (CN)
(74) Representative: Hautier IP - MC/EP
(86) International application number: PCT/CN2024/126665
(87) International publication number: WO 2025/123939

(57) **Abstract**

Disclosed are a visual configuration method for ceiling microphone sound zone, an electronic device, and a storage medium. The method comprises: after a ceiling microphone device is hoisted, deployed and commissioned in a conference room, acquiring a floor plan of the conference room imported by configuration personnel; acquiring a simulated ceiling microphone device added to or removed from the floor plan by the configuration personnel, and obtaining data and parameters of the simulated ceiling microphone device; and acquiring an online ceiling microphone device, and issuing the data and parameters of the simulated ceiling microphone device to the ceiling microphone device.

## Description

### Cross-References to Related Applications

This application claims the priority of Chinese Patent Application No. 202311696400.6 filed on December 11, 2023, and of Chinese Patent Application No. 202410752667.0 filed on June 12, 2024, and the entire contents of the aforementioned applications are incorporated herein by reference.

### Technical Field

The embodiments of the present application relate to the technical field of ceiling microphones, and in particular to a visual configuration method for ceiling microphone sound zone, an electronic device, and a storage medium.

### Background

In the relevant art, large-array microphone products are concentrated in the high-end ceiling microphone category. The number of such microphones ranges from at least 28 to as many as 100 or more. They are installed on the ceilings of extra-large spaces, such as large indoor conference rooms and tiered classrooms, and are used for collection of sound from remote calls or local sound reinforcement.

Some high-end ceiling microphone products use a petal-shaped pickup zone configuration, while others use a matrix-type pickup zone configuration. In the petal-shaped pickup zone configuration, since the devices are ceiling-mounted in large indoor spaces, the coverage scheme adopted centers on the high-end ceiling microphone, dividing multiple conical pickup zones into 360-degree segments to cover the area directly below the microphone device. In the rectangular pickup zone configuration, the coverage scheme adopted is based on the planar area that a single device can cover, with rectangular pickup zones arbitrarily divided within that area.

The inventors discovered that the aforementioned methods of implementing pickup zones cannot provide precise audio coverage for indoor spaces. The petal-shaped pickup zone configuration cannot be refined to specific planar areas for pickup; The coverage area of the projection area can only be roughly controlled by adjusting the pitch angle of the conical sound beam projected by the high-end ceiling microphone. Compared to the petal-shaped pickup zone configuration, the rectangular pickup zone configuration allows for better planar coverage settings, but only rectangular areas can be set, so areas that do not need to be picked up will also be selected.

### Summary

Embodiments of the present invention provide a visual configuration method for ceiling microphone sound zone, an electronic device, and a storage medium, designed to address at least one of the aforementioned technical problems.

In a first aspect, an embodiment of the present invention provides a visual configuration method for ceiling microphone sound zone, comprising: after a ceiling microphone device is hoisted, deployed and commissioned in a conference room, acquiring a floor plan of the conference room imported by configuration personnel; acquiring a simulated ceiling microphone device added to or removed from the floor plan by the configuration personnel, and obtaining data and parameters of the simulated ceiling microphone device; and acquiring an online ceiling microphone device, and issuing the data and parameters of the simulated ceiling microphone device to the ceiling microphone device.

In a second aspect, an embodiment of the present invention provides an electronic device, comprising at least one processor and a memory communicatively connected to the at least one processor, wherein the memory stores instructions executable by the at least one processor, and the instructions are executed by the at least one processor to enable the at least one processor to perform the aforementioned visual configuration method for ceiling microphone sound zone of the present invention.

In a third aspect, an embodiment of the present invention provides a storage medium, storing one or more programs comprising execution instructions, wherein the execution instructions can be read and executed by an electronic device (including, but not limited to, a computer, a server, or a network device) to perform the aforementioned visual configuration method for ceiling microphone sound zones of the present invention.

In a fourth aspect, an embodiment of the present invention further provides a computer program product, comprising a computer program stored on a storage medium, wherein the computer program comprises program instructions that, when executed by a computer, cause the computer to perform the aforementioned visual configuration method for ceiling microphone sound zone of the present invention.

The method of the present application uses a top-down view model of the conference room floor plan as a drawing board, then adds a model ceiling microphone device to set its deployment position and height, and subsequently adds a call pickup zone and a sound reinforcement-pickup zone to the simulated device to configure the device's pickup range. Once configured, a software-installed computer and the ceiling microphone are placed in the same network. The simulated data configured in the software is then sent to the actual ceiling microphone device, which automatically applies the settings, thereby achieving precise pickup configuration.

### Description of the Drawings

To more clearly illustrate the technical solutions of the embodiments of the present invention, the accompanying drawings used in the description of the embodiments will be introduced below. The accompanying drawings merely illustrate some embodiments of the present invention. A person skilled in the art may derive other drawings based on these drawings without requiring inventive effort.
Figure 1 is a flowchart of a visual configuration method for ceiling microphone sound zone according to an embodiment of the present invention;
Figure 2 is a flowchart of another visual configuration method for ceiling microphone sound zone according to an embodiment of the present invention;
Figure 3 is a diagram of a pickup zone configuration of the relevant technology according to an embodiment of the present invention;
Figure 4 is a diagram of a pickup zone configuration in a specific example of a visual configuration method for ceiling microphone sound zone according to an embodiment of the present invention;
Figure 5 is a flowchart of a specific example of a visual configuration method for ceiling microphone sound zone according to an embodiment of the present invention;
Figure 6 is a flowchart of a ceiling microphone sound zone configuration in a specific example of a visual configuration method for ceiling microphone sound zone according to an embodiment of the present invention;
Figure 7 is a schematic diagram illustrating the issuing of simulated data to an actual device in a specific example of a visual configuration method for ceiling microphone sound zone according to an embodiment of the present invention;
Figure 8 is a schematic diagram of a sound zone configuration in a specific example of a visual configuration method for ceiling microphone sound zone according to an embodiment of the present invention;
Figure 9 is a schematic diagram illustrating data issuing in a specific example of a visual configuration method for ceiling microphone sound zone according to an embodiment of the present invention;
Figure 10 is a structural schematic diagram of an electronic device according to an embodiment of the present invention.

### Detailed Description

To make the objectives, technical solutions, and advantages of the embodiments of the present invention clearer, the technical solutions of the embodiments of the present invention will be described clearly and completely below with reference to the accompanying drawings. The described embodiments are part of, but not all of, the embodiments of the present invention. All other embodiments obtained by a person skilled in the art based on the embodiments of the present invention without creative labor fall within the scope of protection of the present invention.

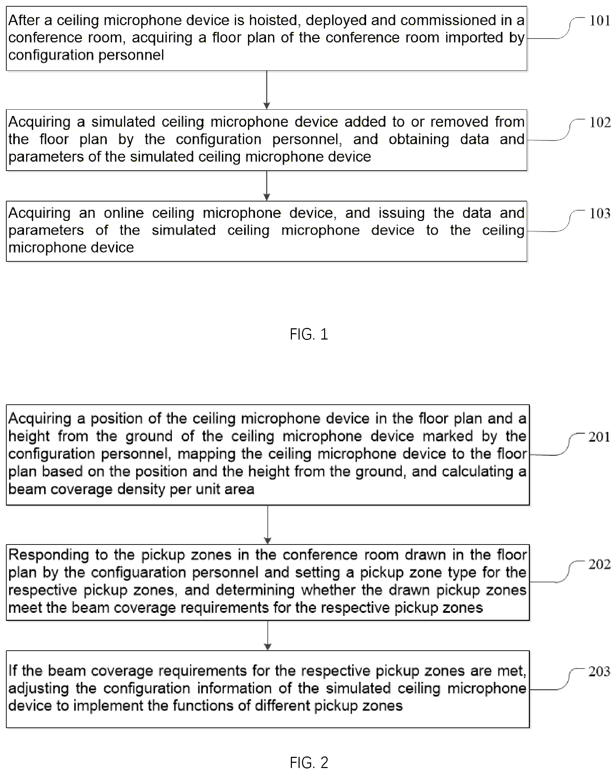

Referring to Figure 1, a flowchart of a visual configuration method for ceiling microphone sound zone provided according to an embodiment of the present invention is shown.

As shown in Figure 1, in step 101, after a ceiling microphone device is hoisted, deployed and commissioned in a conference room, a floor plan of the conference room imported by configuration personnel is acquired.

In step 102, a simulated ceiling microphone device added to or removed from the floor plan by the configuration personnel is acquired, and data and parameters of the simulated ceiling microphone device is obtained.

In step 103, an online ceiling microphone device is acquired, and the data and parameters of the simulated ceiling microphone device are issued to the ceiling microphone device.

In this embodiment, for step 101, the ceiling microphone device will first be hoisted and commissioned in the conference room. The ceiling microphone device may be preferentially installed at a location closer to a pickup zone or at the center of the conference room, and this application imposes no restrictions thereon. After completion of installation and commissioning, the floor plan of the conference room imported by the configuration personnel must be acquired from a configuration software connected to the ceiling microphone device.

Further, in step 102, after acquiring the floor plan, it is also necessary to acquire the simulated ceiling microphone device added to or removed from the floor plan by the configuration personnel. At the same time, a sound zone configuration of the simulated ceiling microphone can be set. For example, the number of ceiling microphone devices arranged in the conference room may be one or more, depending on the area of the conference room. For instance, if the area of the conference room is less than or equal to 60 m², only one device may be arranged, and if the area is more than 60 m², two devices may be arranged, and so on, without further elaboration.

Finally, in Step 103, a visual ceiling microphone sound zone configuration device and the ceiling microphone device are arranged on a same local area network (LAN) to enable communication between the visual ceiling microphone sound zone configuration device and the ceiling microphone device. Powering on the visual ceiling microphone sound zone configuration device can automatically discover the online ceiling microphone device. After acquiring of the online ceiling microphone device, the data and parameters of the simulated ceiling microphone devices are issued to the ceiling microphone device via a private protocol, thereby completing the audio parameter configuration of the ceiling microphone and mapping the simulated pickup configuration to the actual environment.

The method of this embodiment achieves precise pickup settings by utilizing the aforementioned scheme to add or remove the simulated ceiling microphone device after the ceiling microphone device is deployed and commissioned, and then issuing the data and parameters of the simulated ceiling microphone device to the actual ceiling microphone device.

In some optional embodiments, acquiring a simulated ceiling microphone device added to or removed from the floor plan by the configuration personnel includes: acquiring a sound zone configuration of the simulated ceiling microphone device set in the floor plan by the configuration personnel, thereby allowing the configuration personnel to customize various pickup zones in the conference room. The sound zone configuration includes a call pickup zone and a sound reinforcement-pickup zone.

For example, a ceiling microphone configured in the sound reinforcement-pickup zone collects the sound from the sound reinforcement-pickup zone and sends it to a local sound reinforcement module, thereby realizing low-latency and high-fidelity sound reinforcement via an AI-AFC (Adaptive Feedback Cancellation, a howling suppression method) module. A high-end ceiling microphone configured in the call pickup zone collects the sound from the call pickup zone and sends it to a remote call module, and transmits the processed audio to a remote end via an AI noise reduction module, an AI reverberation removal module, and an AI automatic gain control module. A high-end ceiling microphone configured in a mute zone collects the sound from the mute zone and then mutes the sound from the mute zone, thereby neither transmitting it to the remote end, nor reinforcing it. By setting up different pickup zones, the sound from different zones can undergo distinct subsequent processing, thereby achieving the functionality of the pickup zones.

In some optional embodiments, the call pickup zone configuration includes a mute switch, an AES (Acoustic Echo Suppression) level configuration, an equalizer configuration, an AGC (Automatic Gain Control) configuration, an output gain, a steady-state noise reduction level, an AI noise reduction level, and a reverberation suppression level.

Among these, AES (Acoustic Echo Suppression) is used to reduce echo interference and is commonly employed in voice communication systems (such as conference calls and video calls). Echo occurs when a sound signal is played through a speaker and then re-captured by a microphone, causing users to hear their own voice. The primary purpose of AES is to reduce this echo through signal processing algorithms, thereby improving audio quality in communication.

An equalizer (EQ) is an audio processing technique used to adjust the volume of different frequency ranges of an audio signal. This can help improve the overall audio quality or emphasize certain frequency characteristics. EQ is widely used in music production, broadcasting, recording, and real-time audio processing.

AGC is a technology that controls an audio signal gain by automatically adjusting the audio signal gain to maintain an output signal amplitude at a constant level. AGC is widely used in various audio devices, such as audio amplifiers, recording devices, and communication systems. The principle of AGC involves measuring an imported signal strength and adjusting a gain based on these measurements to ensure that the output signal amplitude remains within a controllable range.

In some optional embodiments, the sound reinforcement-pickup zone configuration includes a sound reinforcement zone channel switch, an AFC level configuration, an equalizer configuration, an AGC configuration, an output gain, a steady-state noise reduction level, an AI noise reduction level, and a reverberation suppression level.

AFC is a technology that eliminates feedback in audio systems through self-adjustment and is widely used in sound reinforcement systems, teleconferencing systems, hearing aids, conference rooms, public broadcasting systems, and smart speakers. For example, in the sound reinforcement systems, feedback is prone to occur between microphones and speakers, resulting in high-frequency howling. AFC can detect and eliminate this feedback in real time, ensuring clean, noise-free sound.

Referring further to Figure 2, a flowchart of another visual configuration method for ceiling microphone sound zone provided according to an embodiment of the present invention is shown. This flowchart primarily serves to further specify the steps of the process described in Flowchart 1 under "acquiring a simulated ceiling microphone device added to or removed from the floor plan by the configuration personnel".

As shown in Figure 2, in step 201, a position of the ceiling microphone device in the floor plan and a height of the ceiling microphone device from the ground marked by the configuration personnel are acquired. The ceiling microphone device is mapped to the floor plan based on the position and the height from the ground, and a beam coverage density per unit area is calculated.

In step 202, response to the pickup zones in the conference room drawn in the floor plan by the configuration personnel is made and a pickup zone type for the respective pickup zones is set, and determination is made whether the drawn pickup zones meet the beam coverage requirements for the respective pickup zones;
In step 203, if the beam coverage requirements for the respective pickup zone are met, the configuration information of the simulated ceiling microphone device is adjusted to achieve the functionality of the different pickup zones.

In this embodiment, for step 201, after obtaining the floor plan, it is also necessary to obtain a location and a height from the ground of a high-end ceiling microphone marked by the configuration personnel in the floor plan. The high-end ceiling microphone is then mapped to the floor plan based on the location and the height, and the beam coverage density per unit area is calculated. If the beam coverage density does not meet the preset requirements, an installation position of the high-end ceiling microphone must be adjusted. The preset requirements may be that the number of beams per unit area is not less than 10 or not less than 8, which will not be elaborated upon here. The number of high-end ceiling microphones arranged in the conference room can be one or more, depending on the area of the conference room. For example, when the area of the conference room is less than or equal to 60 m², only one may be arranged. For the area larger than 60 m², two may be arranged, and so on; further details are omitted.

In Step 202, the pickup zones drawn by the configuration personnel in the floor plan, along with the pickup zone type assigned to the respective pickup zones are acquired, and determination is made whether the drawn pickup zones meet the beam coverage requirements for the respective pickup zones. The pickup zone type may include a sound reinforcement-pickup zone and a call pickup zone.

Finally, in Step 203, if the pickup zones drawn by the configuration personnel meet the beam coverage requirements for the respective pickup zones, the functionality of different pickup zone types can be achieved by adjusting the configuration information of the simulated ceiling-mounted microphone device. For example, a call pickup zone can perform targeted processing for calls after pickup, while a sound reinforcement-pickup zone can perform the sound reinforcement processing after pickup, and so on. Further details are omitted.

Furthermore, if the pickup zones drawn by the configuration personnel do not meet the beam coverage requirements for the respective pickup zones, the configuration personnel will be notified that the drawn pickup zones are unavailable. For instance, if the pickup zone drawn by the user or the selected pickup zone type is unreasonable, it will fail to meet the beam coverage requirements for the pickup zone. In such cases, the drawn pickup zone will be marked as unavailable-for example, by displaying a red border or providing a text or voice prompt stating that the zone is unavailable. This application imposes no restrictions on such implementations. Furthermore, the functionality of different types of pickup zones can be achieved by adjusting the configuration information of the high-end ceiling microphone. For example, a mute zone can mute the sound from that zone after pickup, a call pickup zone can perform targeted processing for calls after pickup, and a sound reinforcement-pickup zone can perform sound reinforcement processing after pickup. Further details are omitted.

The method of this embodiment enables the configuration personnel to customize various pickup zones in a conference room by utilizing the aforementioned scheme to define pickup zones and implement their functions after a high-end ceiling microphone is deployed and commissioned.

In some optional embodiments, acquiring a simulated ceiling microphone device added to or removed from the floor plan by the configuration personnel further comprises: acquiring different pickup zones drawn in the floor plan by the configuration personnel includes: selecting a zone that must be picked up by drawing points to outline it and avoiding a zone that does not need to be picked up. The shape of the pickup zone supports irregular shapes. Specifically, when drawing a pickup zone, the user can use irregular shapes, such as "L"-shaped, "F"-shaped, or "concave"-shaped, among others; this application is not limited to these examples.

In some optional embodiments, after acquiring a simulated ceiling microphone device added to or removed from the floor plan by the configuration personnel and obtaining data and parameters of the simulated ceiling microphone device, the method includes:
Setting the data and parameters of the simulated ceiling microphone device as a first set of simulated ceiling microphone configurations, and then acquiring a simulated ceiling microphone device added to or removed from the floor plan by the configuration personnel, and obtaining a second set of simulated ceiling microphone configurations. This allows for providing of multiple sets of ceiling microphone configurations based on the usage scenarios of the conference room.

In some optional embodiments, acquiring an online ceiling microphone device and issuing the data and parameters of the simulated ceiling microphone device to the ceiling microphone device further includes: acquiring the first set of simulated ceiling microphone configurations or the second set of simulated ceiling microphone configurations selected by the configuration personnel, and issuing the first set of simulated ceiling microphone configurations or the second set of simulated ceiling microphone configurations to the ceiling microphone device. This allows for the flexible switching of ceiling microphone configurations based on different usage scenarios of the conference room.

In some optional embodiments, if multiple call pickup zones exist, the method further includes: in response to a priority configuration by the configuration personnel for the multiple call pickup zones, prioritizing the pickup and processing of the sound from the call pickup zone with the higher priority. For example, if there are three call pickup zones, the user can choose to configure the priorities of these three zones, so that the sound from the zone with the highest priority will be picked up and processed first.

In some optional embodiments, the high-end ceiling microphone has more than 800 pickup beams, and the high-end ceiling microphone includes at least 10 usable beams per square meter. This ensures that there are sufficient pickup beams per unit area to meet subsequent processing requirements.

In some optional embodiments, the directivity, narrow beam width, and interference resistance of each beam ensure a 20dB isolation level within the pickup zone. This ensures sufficient isolation within the pickup zone, thereby better meeting subsequent processing requirements.

To meet various subsequent processing requirements, the height from the ground of the high-end ceiling microphone is greater than or equal to 2.7m and less than or equal to 5m. This ensures that the effective pickup range of the high-end ceiling microphone is moderate. The beams can be dispersed in a planar space, and the beam distribution is not too sparse, so as not to affect the pickup performance of the high-end ceiling microphone.

In a specific example, the inventor discovered that the implementation of the pickup zone depends on the number of pickup beams per unit area; the greater the number of pickup beams per unit area, the greater the difficulty in implementing the signal processing algorithm.

High-end ceiling microphone products all involve the configuration of pickup zones. Regardless of the configuration method, the fundamental requirement is that the pickup zone must contain at least one pickup beam. For high-end ceiling microphones at this height, the pickup zone typically contains eight or more beams; the greater the number of beams, the greater the implementation difficulty. Pickup beam is a sound capture and localization technology that uses an array of microphones or sensors to focus on and capture sound from a specific direction.

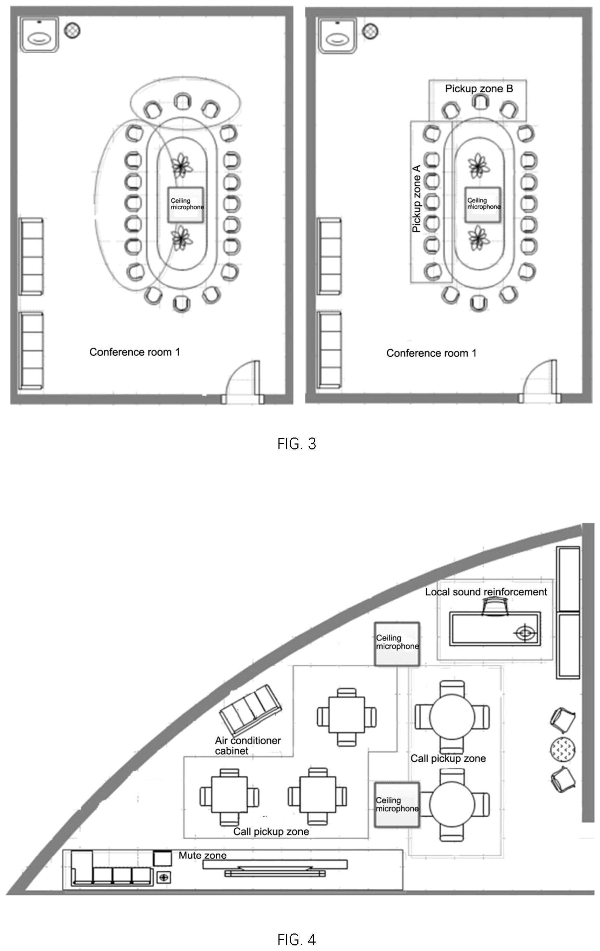

Refer to Figure 3, a petal-shaped pickup zone configuration on the left and a rectangular pickup zone configuration on the right are shown.

The petal-shaped pickup zone is formed by the projection of a fixed combination of multiple beams. Therefore, during product design, it is already hardcoded into the device's firmware; the projected petal-shaped pickup zone can only be roughly adjusted by modifying the pitch angles of the combined beams.

The configuration of a rectangular pickup zone is more flexible, and the pitch angle of each beam is fixed and projected into the plane space. The deployment personnel of the device draw the rectangular pickup zone based on the device's hoisting location and the actual required pickup zone beneath the device. The pickup zone can be large or small, precisely tailored to specific locations, with controllable boundaries. The only requirement is that the rectangular area must contain at least one beam projection; therefore, the more beam projections per unit area, the more precisely the rectangular zone can be drawn.

In conference scenarios with irregular indoor layouts, configuring a rectangular pickup zone may inadvertently include zones that do not need to be covered. As shown in Figure 4, an air conditioner cabinet cannot be avoided when defined by a rectangular pickup zone. In such a case, an irregular pickup zone must be drawn.

As shown in Figure 4, the solution in the embodiments of this application supports the ability to configure the irregular pickup zone to accommodate the scenarios covered by high-end ceiling microphone products. A pickup zone can be defined as three different types: sound reinforcement-pickup zone, a call pickup zone, and a mute zone. By combining flexible configuration of pickup zone shapes with different applications, the product can better meet the pickup and sound reinforcement needs of various meeting scenarios. Additionally, priority settings are provided for the call pickup zone to ensure that the sound of speakers in designated areas is picked up with priority. The number of call pickup zones can be up to 6 or 8, and this application imposes no restrictions thereon. Priority settings can be configured during the initial setup of the high-end ceiling microphone or modified temporarily during a meeting.

Irregular pickup zones may appear to differ only in shape, but they actually require a higher density of pickup beams per unit area. When designing an irregular pickup zone, it is essential to ensure that the necessary number of pickup beams is always included under any circumstances to guarantee optimal pickup and sound reinforcement performance for that zone.

As mentioned earlier, the three types of pickup zones provide a call pickup zone for remote calls, a sound reinforcement-pickup zone dedicated to local sound reinforcement, and a mute zone dedicated to block noise sources or other areas not requiring pickup. The implementation of these three types of pickup zones also requires sufficient isolation between them. When a call pickup zone and a sound reinforcement-pickup zone are adjacent, they do not interfere with each other. The isolation of a pickup zone refers to the degree to which audio signals are separated from external interference or other sound sources in a recording. The quality of this isolation directly affects audio clarity and quality.

The mute zone is implemented by using sound source localization and separation algorithms to isolate audio signals outside the mute zone from those within it, thereby enabling the capturing and muting of sounds within the mute zone.

The implementation of the sound reinforcement-pickup zone involves signal processing of the audio signals captured by the microphone, such as equalization and dynamic range control, to optimize sound quality and adapt to different environmental requirements, and then to reinforce the sound within this pickup zone for transmission through the sound reinforcement system.

The implementation of the call pickup zone involves signal processing of the audio signals picked up by the microphone, such as AI noise reduction, AI reverberation removal, and AI automatic gain control, before transmitting the audio to remote devices via cloud conferencing software.

Configuring irregular pickup zones requires a high-end ceiling microphone system with a sufficient number of microphones to create enough fixed beams, ensuring a high beam density per unit area. This approach ensures that when drawing pickup zones, there is no need to excessively worry about whether sufficient beams can be covered, thereby preventing a poor pickup experience. Achieving a sufficient number of microphones and fixed beams presents significant technical barriers. For instance, there must be at least 10 usable beams per square meter, and each beam must possess sufficient directionality, narrow beam width, and interference resistance to meet the 20dB isolation requirement for the pickup zone. Due to these technical barriers, the configuration of irregular pickup zones has not been implemented in previous product solutions.

Classifying pickup zones into a call pickup zone, a sound reinforcement-pickup zone, and a mute zone allows for flexible adaptation to various pickup requirements in meeting scenarios. However, this requires that the isolation of the pickup zones be sufficiently high and stable to achieve the intended effects for each configured type. For example, the call pickup zone requires AI noise reduction, AI reverberation cancellation, and clear audio quality; the sound reinforcement-pickup zone requires low latency, high fidelity, and sound reinforcement capability of 10 dB or more; and the mute zone requires absolute sound shielding capability.

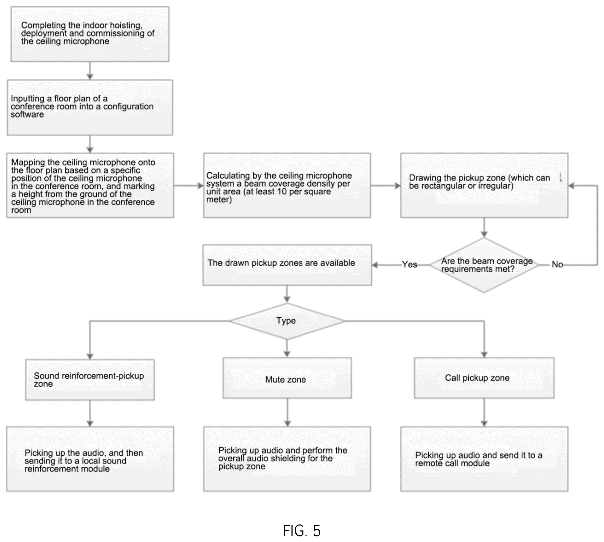

Refer to Figure 5, a flowchart of the pickup zone configuration is shown.

In the embodiments of this application, when configuring a pickup zone for a high-end ceiling microphone, it is essential to perform an accurate plane mapping strictly based on a position of the high-end ceiling microphone within the indoor space. The specific process is as follows:
Step 1: Completing the indoor hoisting, deployment and commissioning of the high-end ceiling microphone. For example, when using companion products, coordination during commissioning is required.
Step 2: Importing a floor plan of a conference room into a configuration software.
Step 3: Accurately marking a position and a height from the ground of the high-end ceiling microphone in the floor plan. The height greater than 2.7 m and less than 5 m is recommended. If it is too low, the effective pickup range of the high-end ceiling microphone will be too small, and the beam cannot spread out in the plane space; if it is too high, the beam distribution will be too sparse, affecting the pickup performance of the high-end ceiling microphone.
Step 4: Placing high demands on multi-channel signal processing algorithms. First, when designing the microphone layout for the high-end ceiling microphone, sufficient microphone channels must be allocated to receive audio signals. Designing an appropriate microphone array to meet beamforming and sound source localization requirements is critical, with the selection, layout, and calibration of the microphone array being key challenges. Second, in multi-beam scenarios, ambient noise and echoes can affect algorithm performance; therefore, appropriate noise suppression and echo cancellation techniques must be employed to improve the intelligibility of the target signal. Finally, real-time processing may be required in multi-beam scenarios, so the computational complexity and real-time performance of the algorithms must be considered. Some advanced algorithmic models may require significant computational resources, thereby necessitating trade-offs and optimization in practical applications. At a controlled installation height, the high-end ceiling microphone require high-density beam coverage. Generally, a single unit can cover a 60-square-meter space, with no less than 10 beams per square meter. Therefore, to ensure the pickup performance and coverage per unit area of the high-end ceiling microphone, a total of over 800 beams is required.
Step 5: Step 5 builds upon Step 4. In the configuration software, use the point-marking tool on the floor plan to draw the required pickup zones, avoiding zones that do not require pickup and selecting the zones that must be picked up. The effectiveness of the pickup zone is closely related to the number of beams it encompasses.
Step 6: An irregular pickup zone can be drawn on the basis that the requirements of Step 4 are satisfied, ensuring that the number of beams per square unit exceeds 10.
Steps 7-9: Setting the pickup zone type. Options include a sound reinforcement-pickup zone, a call pickup zone, and a mute zone.
Step 10: If set as the sound reinforcement-pickup zone, sound captured within the irregular pickup zone is sent directly to a local sound reinforcement module and reinforced with low latency and high fidelity via an AI-AFC module. If set as the mute zone, sound picked up within that irregular pickup zone is completely blocked and neither sent to a remote end nor reinforced. If set as the call pickup zone, the captured sound is sent directly to a remote call module and transmitted to the remote end as clear audio through modules such as AI noise reduction, AI reverberation removal, and AI automatic gain control.

In the embodiments of this application, a high-end ceiling microphone refers to a ceiling microphone device equipped with nearly 100 digital microphones. It belongs to the category of large-scale array microphone devices and must possess the product or solution capabilities required for both remote conferencing and local sound reinforcement. A single device is suitable for a meeting space of approximately 60 square meters, and cascading can accommodate larger meeting spaces. In a specific example, a single high-end ceiling microphone supports over 800 pickup beams, with at least 10 independent beams per square meter.

A single beam offers better directionality and stronger resistance to interference. The combined effect of multiple beams within a pickup zone results in improved isolation of that zone. Different types of pickup zones do not interfere with one another, and there is a clear distinction between the areas inside and outside the pickup zones.

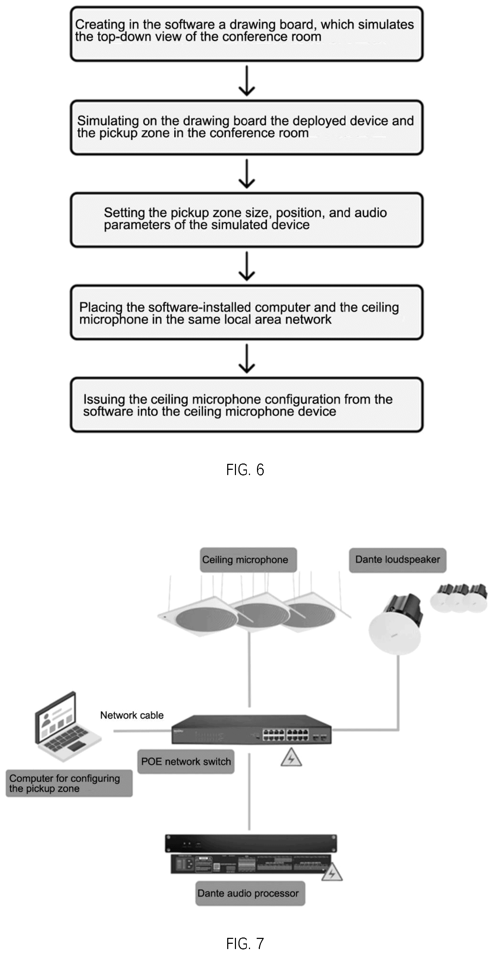

Referring to Figure 6, a flowchart illustrating a specific example of a visual configuration method for ceiling microphone sound zone according to an embodiment of the present invention is shown.

As shown in Figure 6, a drawing board is created using a top-down view model of the conference room floor plan. Using the floor plan coordinates as a reference, the deployment location and height of the device are set by adding model devices. The pickup range of the device is then configured by assigning the call pickup zone and the sound reinforcement-pickup zone to the simulated device. Once configured, a software-installed computer and the ceiling microphone are placed in the same network; the software will then automatically establish communication. The simulated data configured in the software is sent to the actual ceiling microphone device, which automatically applies the settings, thereby achieving precise pickup configuration.

For example, first, a ceiling microphone device is installed in a conference room. The ceiling microphone device and the software configuration are connected to a POE switch to ensure network connectivity. The default pickup range is a square area with a side length of 9 meters centered on the device. Then, the ceiling microphone configuration software is run and a conference room is created. The descriptive information is entered, and once completed, "Scene Configuration" is clicked to begin setting up the pickup zone. For example, the layout of the ceiling microphone installed in the conference room is referred to and the required pickup zone is configured within the software. Finally, after configuration is completed, "Apply and Deploy" is clicked to send the configuration information to the device. The device updates the algorithm settings based on the configured pickup zone coordinates and adjusts the pickup range.

Refer to Figure 7, a schematic diagram illustrating the issuing of simulated data in a specific example of a visual configuration method for ceiling microphone sound zone according to an embodiment of the present invention to a real device is shown.

As shown in Figure 7, after the simulated ceiling microphone device is configured, the software-installed computer and the ceiling microphone are placed in the same network. At this point, the software will automatically establish communication. When the simulated data configured in the software is issued to the actual ceiling microphone device, the device will automatically apply the settings, thereby achieving precise pickup configuration.

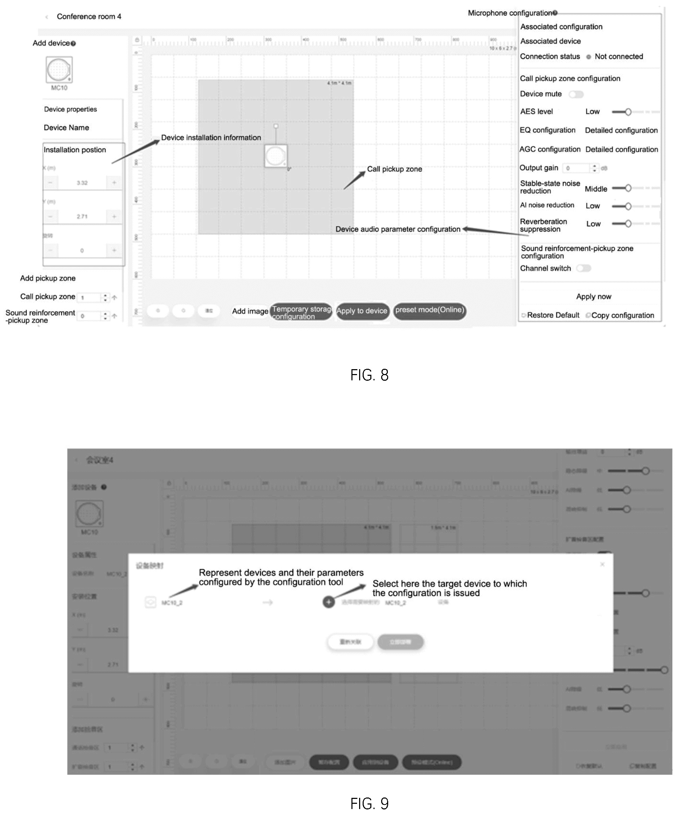

Referring to Figure 8, a schematic diagram of a sound zone configuration in a specific example of a visual configuration method for ceiling microphone sound zone according to an embodiment of the present invention is shown.

As shown in Figure 8, in the software is created a drawing board, which simulates the top-down view of the conference room and on which a simulated ceiling microphone device can be added and removed and a sound zone configuration of the simulated device can be set. The sound zone primarily consists of a call pickup zone and a sound reinforcement-pickup zone. The call pickup zone configuration includes a mute switch, an AES level, an EQ configuration, an AGC configuration, a gain, a steady-state noise reduction level, an AI noise reduction level, and a reverberation suppression level. The sound reinforcement zone configuration includes a sound reinforcement zone channel switch, an AFC level configuration, an EQ configuration, an AGC configuration, an output gain, a steady-state noise reduction level, an AI noise reduction level, and a reverberation suppression level. These steps enable more intuitive, efficient, and precise configuration of ceiling microphone parameters. Multiple sets of configurations can be provided for the same conference room, allowing for seamless switching between them based on different scenarios in practical applications.

Referring to Figure 9, a schematic diagram illustrating data issuing in a specific example of a visual ceiling microphone zone configuration method according to an embodiment of the present invention is shown.

As shown in Figure 9, the software and the ceiling microphone device are placed in the same local area network (LAN) to enable communication between the software and the ceiling microphone device. Upon startup, the software detects an online ceiling microphone device. The data and parameters of the simulated ceiling microphone set in Step 1 are then issued to the ceiling microphone via a private protocol, thereby completing the audio parameter configuration and mapping the simulated pickup configuration to the actual environment.

In implementing the present application, the inventor also adopted the following approaches. One of them is that the beam density requirements within the pickup zone are relaxed, such as requiring at least one beam. For the high-end ceiling microphone, the number of pickup beams can be reduced, thereby lowering the implementation difficulty of the high-end ceiling microphone. However, the actual performance of the pickup zone will deteriorate, and significant issues may arise regarding isolation and boundary definition. Irregular pickup zones lose their value because it may be impossible to avoid areas at the edges where unwanted audio is picked up. Another approach is that there is no need to distinguish between the sound reinforcement-pickup zone and the call pickup zone; by default, all picked up audio can be sent to both the remote end and the local end. Local sound reinforcement and remote calls have different sound requirements. Local sound reinforcement has higher requirements for sound quality and transmission latency, requiring the avoidance of unnecessary processing modules. Total end-to-end latency must be controlled at 25ms as much as possible to avoid howling. Remote calls are less sensitive to latency but require the elimination of local noise and reverberation as much as possible. Since two-way communication must be supported, additional signal processing modules are required.

In another embodiment, the present invention also provides a non-volatile computer storage medium, storing computer-executable instructions, wherein the computer-executable instructions are configured to execute the visual ceiling microphone zone configuration method in any of the aforementioned method embodiments;

As an embodiment, the non-volatile computer storage medium of the present invention stores computer-executable instructions, which are configured to:
After the ceiling microphone device is hoisted, deployed and commissioned in a conference room, acquire a floor plan of the conference room imported by configuration personnel;
acquire a simulated ceiling microphone device added to or removed from the floor plan by the configuration personnel and obtain data and parameters of the simulated ceiling microphone device; and acquire an online ceiling microphone device and issue the data and parameters of the simulated ceiling microphone device to the ceiling microphone device.

The non-volatile computer-readable storage medium may include a program storage zone and a data storage zone. The program storage zone may store an operating system and at least one application required for functionality. The data storage zone may store data created based on the use of the visual ceiling microphone sound zone configuration device, among other things. Furthermore, the non-volatile computer-readable storage medium may include a high-speed random access memory (RAM) and may also comprise a non-volatile memory, such as at least one disk storage device, a flash memory device, or other non-volatile solid-state storage devices. In some embodiments, the non-volatile computer-readable storage medium may optionally include a memory located remotely from the processor. Such remote memories may be connected to the visual ceiling microphone sound zone configuration device via a network. Examples of such networks include, but are not limited to, Internet, corporate intranets, local area networks, mobile communication networks, and combinations thereof.

An embodiment of the present invention also provide a computer program product, comprising a computer program stored on a non-volatile computer-readable storage medium. The computer program comprises program instructions that, when executed by a computer, cause the computer to perform the aforementioned visual configuration method for ceiling microphone sound zone.

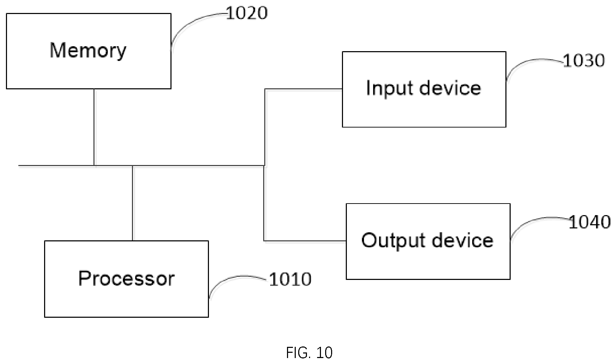

Figure 10 is a structural schematic diagram of an electronic device according to an embodiment of the present invention. As shown in Figure 10, the device comprises one or more processors 1010 and a memory 1020. Figure 10 illustrates a single processor 1010 as an example. The device for the visual configuration method for ceiling microphone sound zone may further include: an input device 1030 and an output device 1040. The processor 1010, the memory 1020, the input device 1030, and the output device 1040 may be connected via a bus or by other means. Figure 10 illustrates a connection via a bus as an example. The memory 1020 serves as the aforementioned non-volatile computer-readable storage medium. The processor 1010 executes various functional applications and data processing for the server by running non-volatile software programs, instructions, and modules stored in memory 1020, thereby implementing the visual configuration method for ceiling microphone sound zone as described in the method embodiments. The input device 1030 can receive inputted numerical or character information, and generate key signal inputs related to user settings and functional control of the visual ceiling microphone sound zone configuration device. The output device 1040 may include a display device such as a display screen.

The aforementioned product can execute the method provided by the embodiments of the present invention and possesses the functional modules and beneficial effects corresponding to the method. For technical details that are not described in more detail in this embodiment, reference is made to the method provided in the embodiments of the invention.

As an embodiment, the aforementioned electronic device is applied in a visual ceiling microphone sound zone configuration device, and comprises at least one processor and a memory communicatively connected to the at least one processor, wherein the memory stores instructions executable by the at least one processor, and the instructions are executed by the at least one processor to enable the at least one processor to:
after a ceiling microphone device is hoisted, deployed and commissioned in a conference room, acquire a floor plan of the conference room imported by configuration personnel;
acquire a simulated ceiling microphone device added to or removed from the floor plan by the configuration personnel, and obtain data and parameters of the simulated ceiling microphone device; and
acquire an online ceiling microphone device and issue the data and parameters of the simulated ceiling microphone device to the ceiling microphone device.

Finally, it should be noted that the above embodiments are provided merely to illustrate the technical solutions of the present invention and are not intended to limit it. Although the present invention has been described in detail with reference to the embodiments, those skilled in the art will understand that modifications may be made to the technical solutions of the aforementioned embodiments, or that some technical features may be replaced with equivalents. Such modifications or replacements do not cause the corresponding technical solutions to deviate from the spirit and scope of the technical solutions of the embodiments of the present invention.

## Claims

1. A method for visual configuration of ceiling microphone zones, comprising:
after a ceiling microphone device is hoisted, deployed and commissioned in a conference room, acquiring a floor plan of the conference room imported by configuration personnel;
acquiring a simulated ceiling microphone device added to or removed from the floor plan by the configuration personnel, and obtaining data and parameters of the simulated ceiling microphone device; and
acquiring an online ceiling microphone device, and issuing the data and parameters of the simulated ceiling microphone device to the ceiling microphone device.

2. The method according to claim 1, wherein acquiring a simulated ceiling microphone device added to or removed from the floor plan by the configuration personnel comprises:
acquiring a sound zone configuration of the simulated ceiling microphone device set in the floor plan by the configuration personnel, which comprises a call pickup zone configuration and a sound reinforcement-pickup zone configuration.

3. The method according to claim 2, wherein the call pickup zone configuration comprises a mute switch, an AES level configuration, an equalizer configuration, an AGC configuration, an output gain, a steady-state noise reduction level, an AI noise reduction level, and a reverberation suppression level.

4. The method according to claim 2, wherein the sound reinforcement-pickup zone configuration comprises a sound reinforcement zone channel switch, an AFC level configuration, an equalizer configuration, an AGC configuration, an output gain, a steady-state noise reduction level, an AI noise reduction level, and a reverberation suppression level.

5. The method according to claim 1, wherein acquiring a simulated ceiling microphone device added to or removed from the floor plan by the configuration personnel further comprises:
acquiring a position of the ceiling microphone device in the floor plan and a height from the ground of the ceiling microphone device marked by the configuration personnel, mapping the ceiling microphone device to the floor plan based on the position and the height from the ground, and calculating a beam coverage density per unit area;
responding to the pickup zones in the conference room drawn in the floor plan by the configuration personnel and setting a pickup zone type for the respective pickup zones, and determining whether the drawn pickup zones meet the beam coverage requirements for the respective pickup zones; and
if the beam coverage requirements for the respective pickup zones are met, adjusting the configuration information of the simulated ceiling microphone device to implement the functions of different pickup zones.

6. The method according to claim 1, wherein acquiring a simulated ceiling microphone device added to or removed from the floor plan by the configuration personnel further comprises:
acquiring the different pickup zones drawn in the floor plan by the configuration personnel, comprising selecting a zone that must be picked up by drawing points to outline it and avoiding a zone that does not need to be picked up, wherein the shape of the pickup zone supports irregular shapes.

7. The method according to claim 1, wherein, after acquiring a simulated ceiling microphone device added to or removed from the floor plan by the configuration personnel and obtaining data and parameters of the simulated ceiling microphone device, the method further comprises:
setting the data and parameters of the simulated ceiling microphone device as a first set of simulated ceiling microphone configurations; and
acquiring a simulated ceiling microphone device added to or removed from the floor plan by the configuration personnel, and obtaining a second set of simulated ceiling microphone configurations.

8. The method according to claim 5, wherein acquiring an online ceiling microphone device and issuing the data and parameters of the simulated ceiling microphone device to the ceiling microphone device comprises:
acquiring the first set of simulated ceiling microphone configurations or the second set of simulated ceiling microphone configurations selected by the configuration personnel, and issuing the first set of simulated ceiling microphone configurations or the second set of simulated ceiling microphone configurations to the ceiling microphone device.

9. An electronic device, comprising at least one processor and a memory communicatively connected to the at least one processor, wherein the memory stores instructions executable by the at least one processor, and the instructions, when executed by the at least one processor, enable the at least one processor to perform the steps of the method according to any one of claims 1 to 8.

10. A storage medium, storing a computer program, wherein the program, when executed by a processor, performs the steps of the method according to any one of claims 1 to 8.
